# EUROPEAN PATENT SPECIFICATION

(11) **EP 0 605 752 B1**
(45) Date of publication and mention of the grant of the patent: **22.07.1998**
(21) Application number: 93104489.5
(22) Date of filing: 18.03.1993
(51) Int. Cl.: H02M 3/335, H02M 1/08

(54) **Switching power supply**
Schaltnetzteil
Alimentation en courant commuté

(30) Priority: 05.01.1993 JP 276/93
(43) Date of publication of application: 13.07.1994
(73) Proprietor: Yokogawa Electric Corporation, Tokyo 180 (JP)
(72) Inventor: Inou, Kiyoharu, Mitaka-shi, Tokyo 181 (JP); Matsuda, Shuichi, Kokubunji-shi, Tokyo 185 (JP)
(74) Representative: Henkel, Feiler, Hänzel

(56) References cited:
- EP-A- 0 475 296
- DE-A- 3 920 235
- US-A- 5 008 796
- US-A- 5 117 347
- US-A- 5 144 547

## Description

### Background of the Invention

### Field of the Invention

The present invention relates to a switching power supply which is provided with a primary output circuit and a secondary output circuit and is capable of outputting a plurality of D.C. voltages. A D.C. output voltage of a set value is obtained by controlling the pulse widths of pulses extracted from a square waveform voltage supplied to the secondary output circuit. The present invention relates to an improvement of this secondary output circuit section.

### Summary of the Invention

When driving on an FET, it is necessary for the gate potential to be higher than the source potential by e.g. 4 volts or more. Since the FET source potential in the secondary output circuit is relatively high, in order to obtain a gate potential higher than the source potential, in conventional devices the control signal supplied to the gate of the FET is boosted by a drive transformer. However, the control signal is delayed when it passes through the drive transformer.

In order to solve this problem, the present invention obtains, in an auxiliary power supply, a voltage Vcc, higher than the source potential of the FET and this voltage is then supplied from the auxiliary power supply to a PWM circuit, which then supplies a control signal to the FET, with the result that time delay of the control signal is significantly reduced. In addition, since the present invention can allow an efficient amount of the square waveform voltage supplied to the secondary output circuit to pass through to a smoothing circuit, a high secondary output voltage is obtained.

### Description of the Prior Art

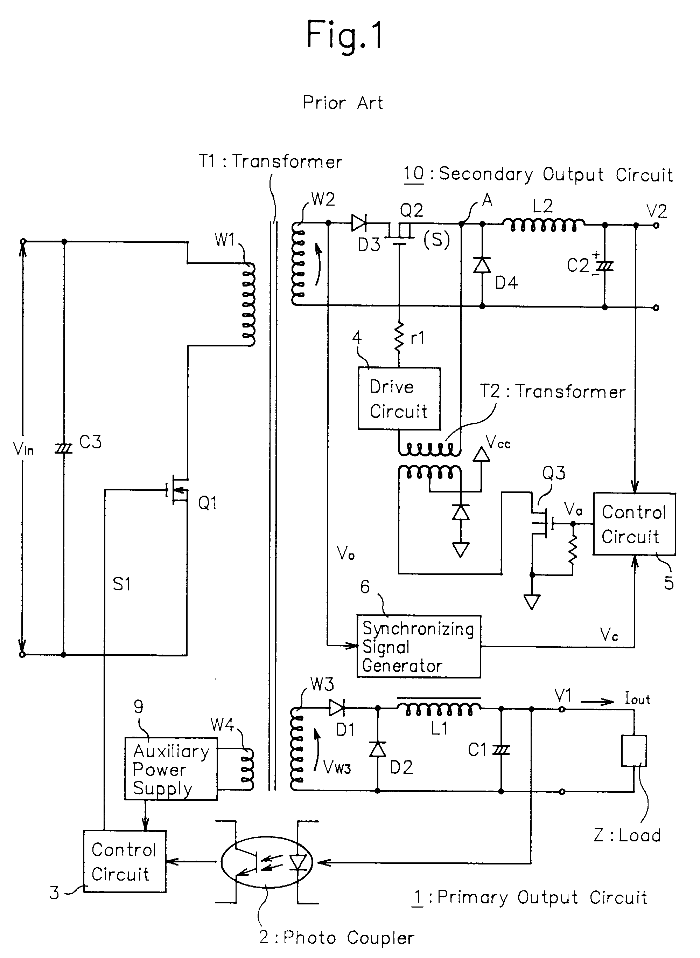

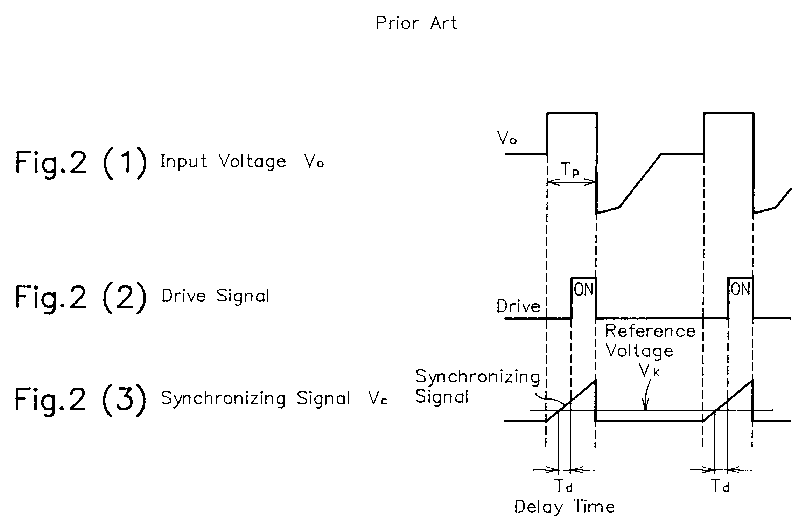

Fig. 1 shows a conventional multi-output switching power supply provided with a primary output circuit and a secondary output circuit, while Fig. 2 shows the respective waveforms of each of the sections of Fig. 1.

The primary output circuit 1 is an output circuit for supplying a voltage V1 which serves as the basis for a signal S1 for controlling a main switch Q1 on a primary side of a transformer T1.

Control circuit 3 outputs a pulse width signal which renders the output voltage V1 of the primary output circuit 1 equal to a set voltage (not shown), thus controlling the duty ratio (the on rate of the switch Q1 per unit of time). As a result, a voltage Vw3 whose duty ratio has been changed is induced in a secondary winding W3. This voltage Vw3 is rectified and smoothed, and its duty ratio stabilizes at points where the primary output V1 of the circuit and the set voltage are uniform. Primary output circuit 1 comprises a secondary winding W3, a diode D1 for rectifying the voltage induced in the secondary winding W3, a smoothing circuit consisting of a choke coil L1 and a capacitor C1, and a diode D2 for discharging the energy stored in the choke coil L1. The value of the output voltage V1 of the primary output circuit 1 is isolated by a photocoupler 2, and is fed back to the primary side of the transformer T1.

The secondary output circuit is a circuit connected to the secondary winding W2 connected to the transformer T1 but wound separately to the primary winding W3, and obtains a D.C. voltage V2 from the voltage induced in the winding W2.

The duty ratio of the induction voltage Vo of the winding W2 of the secondary output circuit 10 changes according to the input voltage Vin or the load current Iout of the primary output circuit 1. Consequently, if countermeasures are not taken, the D.C. output voltage V2 of the secondary output circuit 10 will fluctuate. Because of this, the secondary output circuit 10 is generally provided with a means for stabilizing the secondary output voltage V2. In Fig. 1 the stabilizing means for the secondary output circuit 10 consists of a synchronizing signal generator 6, a control circuit 5, a drive transformer T2, a drive circuit 4, and an FET Q2.

In Fig. 1, the induction voltage Vo (refer to Fig. 2 (1)) of the winding W2 is rectified by the diode D3 and supplied to the switch element of the FET Q2. The on/off functions of the FET Q2 are controlled by the drive circuit 4. The amount of electricity passing through the FET Q2 is smoothed by the choke coil L2 and the capacitor C2, and becomes the secondary output voltage V2 which has reduced ripples. The diode D4 discharges the energy stored in the choke coil L2 during the off periods of the FET Q2.

The stability of the secondary output voltage V2 is achieved by appropriately chopping, in the FET Q2, the pulse width Tp (refer to Fig. 2 (1)) of the induction voltage Vo of the winding W2, and supplying the result to the smoothing circuit (the choke coil L2 and the capacitor C2). The control operation of the FET Q2 will now be explained with reference to Fig. 2.

An FET Q3 connected to the control circuit 5 carries out switching operations, while a transformer T2 carries out level changes of the output Va of the control circuit 5.

The device shown in Fig. 1 operates in the following manner. A D.C. voltage Vin is generated at both ends of a capacitor C3, and the on/off functions of a switch element Q1 are controlled by a control circuit 3. Accordingly, a voltage is intermittently supplied to the primary winding W1, with the result that an induction voltage is generated in the secondary windings W2 and W3.

The primary output voltage V1 obtained from the primary output circuit 1 is fed back to a primary side of the transformer T1 via the photocoupler 2. Then a pulse width modulation signal S1 is produced in the control circuit 3 for conforming the primary output voltage V1 to the set voltage (not shown), and the duty ratio of the switch element Q1 is controlled based thereon.

The duty ratio of the voltage Vo induced in the secondary winding W2 fluctuates according to the input voltage Vin or the load current Iout of the primary output circuit 1. The reason for this is as follows.

When the input voltage Vin decreases, in order to uniformly maintain the primary output voltage V1, the duty ratio of the primary switch Q1 is increased. In other words, by increasing the rate at which the FET Q1 is switched on, due to the reduction of the voltage Vin, the amount of electricity supplied to winding W3 is compensated for.

Also, if the load current Iout of the primary output circuit 1 increases, in order to maintain the uniformity of the primary output voltage V1, the duty ratio of the primary switch Q1 also increases.

Consequently, the duty ratio of the induction voltage of the winding W2 wound around the same core as the winding W3 increases.

Where the duty ratio of the induction voltage of the winding W2 fluctuates, if countermeasures are not taken, the output voltage V2 of the secondary output circuit 10 will also fluctuate. Since fluctuation of the output voltage V2 is a major problem, the device of Fig. 1 performs a control operation for rendering the secondary output voltage V2 uniform.

This control operation will now be explained. As previously described, the input voltage Vo supplied to the secondary output circuit 10 has a waveform as shown in Fig. 2 (1). The synchronizing signal generator 6 inducts the input voltage Vo, and outputs a synchronizing signal (refer to Fig.2 (3)) which increases in a "ramp" waveform ("sawtooth" waveform) only during the time period Tp when the input voltage Vo is at a high level. This synchronizing signal Vc is synchronized to the switching waveform of the primary side of the transformer T1; the synchronizing signal generator 6 detects the on (high) state of the induction voltage Vo of the secondary winding W2 and produces the above waveform. The control circuit 5 inducts both the synchronizing signal Vc having the waveform of Fig. 2 (3) and the secondary output voltage V2, and produces a reference signal VK.

When the secondary output voltage V2 of the secondary output circuit 10 is higher than a set voltage (not shown), the above reference voltage VK (see (3) in Fig 2), produced by the control circuit 5, rises. The control circuit 5 outputs a high level signal Va during the period when the value of the synchronizing signal Vc shown as Fig. 2 (3) is higher than the reference voltage VK produced within the control circuit 5. This output signal Va of the the control circuit 5 drives the FET Q3 on/off. The voltage on the primary side of the drive transformer T2 is boosted and this boosted voltage is supplied to the drive circuit 4.

To explain more specifically, when the secondary output V2 is higher than a set voltage, the reference voltage VK, shown as Fig. 2 (3), increases.
Consequently, the period wherein the value of the synchronizing signal is higher than the reference signal VK, i.e. the period when the FET Q2 is on, is reduced. As a result, since the amount of electricity supplied to the smoothing circuit consisting of the choke coil L2 and the capacitor C2 also decreases, the value of the secondary output voltage V2 decreases and approaches the set voltage.

Conversely, when the secondary output voltage V2 is lower than the set voltage, the reference voltage decreases, and the operation described above occurs in reverse, i.e. the on period of the FET Q2 is increased, and since the amount of electricity supplied to the choke coil L2 and the capacitor C2 increases, the secondary output voltage V2 also increases, approaching the set voltage.

### Object of the Invention

Although generally an MOS-FET is used as the switch element Q2, if the gate potential of the MOS-FET is not at least 4 volts higher than the source potential, the MOS-FET cannot be driven on. Also, in a general junction type FET the gate potential must be higher than the source potential. Further, it is necessary to supply a signal having a voltage at least 4 volts higher than point A in Fig. 1 to the gate of the FET Q2. However, this point A is toward the high potential side of the secondary output circuit 10, so that in order to obtain a potential higher than at point A, a boosting means is necessary. In conventional devices, a drive transformer T2 is provided, to which the output Va of the control circuit is supplied, and which generates a voltage 4 volts higher than that at point A and supplies it to the gate of the FET Q2.

If the drive transformer T2 is provided between the drive circuit 4 and the control circuit 5, when the pulse width signal Va passes through the drive transformer T2, it is delayed. If we refer to this delay time as Td (see Fig. 2(3)), generally this time delay Td would be equal to about 200ns. Consequently, at a time TA the value of the synchronizing signal Vc is higher than the reference voltage VK, and takes the amount of time Td from when the control circuit 5 detects this to when the FET Q2 actually reaches the on-state (refer to Fig. 2 (2)).

Due to this, with respect to the input pulse width Tp supplied to the secondary output circuit 10 (the output pulse width of the transformer T1) the device of Fig. 1 can only supply the amount of electricity of the maximum pulse width (Tp-Td) to the smoothing circuit via the FET Q2. If the switching frequency of the power supply in Fig. 1 is a low frequency of around 100kHz (if the input pulse width Tp is approx. 3 microseconds), Td=200ns << Tp=3us, therefore the delay time Td shown in Fig. 2 (3)is insignificant. However, in a low frequency switching power supply, the transformers and circuit elements are quite large. Recently, due to the miniaturization of switching power supplies, high switching frequencies are preferred in the design thereof.

However, in high frequency switching power supplies, since the input pulse width Tp is small, the rate of the delay time Td increases, and the delay time Td becomes significant. Specifically, in the case of a high switching frequency of 300kHz or more (Tp < lus) wherein the input pulse width Tp is relatively large as compared to the delay time Td, the rate of the delay time Td increases. Consequently, if a large current is to be output from the secondary output circuit, the amount of electricity supplied to the smoothing circuit (the circuit having the choke coil L2 and the capacitor C2) will be small, resulting in the problem that output cannot be maintained.

The present invention has been made to solve the above problem, therefore a first object is to provide a switching power supply which, by reducing the delay time of a control signal Va (a signal for controlling the on/off functions of an FET Q2) by means of a drive transformer T2, can obtain a set secondary output voltage V2 which follows up and operates even under high switching frequencies.

A second object is to provide a switching power supply which can maintain output even when the output current is large due to the reduction of the delay time of the control signal Va from the drive transformer T2.

However, even if the first and second objects are accomplished, it is still not possible to reduce the delay time of the control signal to zero; therefore:

A third object is to provide a switching power supply which can maintain output without limiting the amount of electricity supplied to the smoothing circuit of the secondary output circuit 10 even when only a small delay of the control signal Va exists, and which can maintain output even when a large current is output.

### Brief Description of the Drawings

Fig. 1 is an block diagram of the structure of a conventional switching power supply.

Fig. 2 is a time chart for signals of each section of the device shown in Fig. 1.

Fig. 3 is a block diagram of an embodiment of a switching power supply of the present invention.

Fig. 4 is a block diagram of a synchronizing signal generator used in the switching power supply of the present invention.

Fig. 5 is a time chart for the signals of each section of the circuit shown in Fig. 4.

Fig. 6 is a block diagram of another embodiment of the switching power supply of the present invention.

Fig. 7 is a time chart showing the signals of each section of the device shown in Fig. 6.

Fig. 8 is a time chart illustrating the entire operation of the device shown in Fig. 6.

Fig. 9 is a block diagram of another embodiment of the secondary output circuit of the device shown in Fig. 6.

Fig. 10 is a block diagram of another embodiment of the switching power supply of the present invention.

Fig. 11 is a diagram illustrating the starting operation of the device shown in Fig. 10.

Fig. 12 is a time chart showing the signals of each section of the device shown in Fig. 10.

Fig. 13 is a block diagram of a specific structure of the set voltage circuit 15 in the device shown in Fig. 10.

Fig. 14 illustrates the mounting conditions of the switching power supply of the present invention.

### Detailed Description of the Preferred Embodiments

The present invention will be described in detail below with reference to the accompanying drawings.

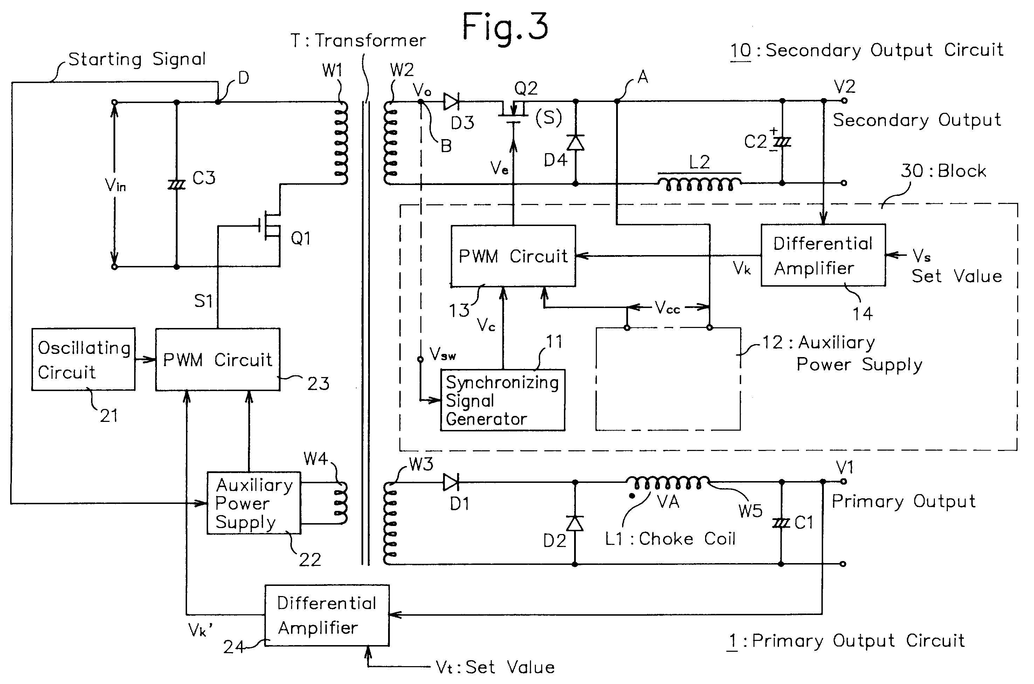

Fig. 3 is a block diagram showing the structure of a first embodiment of the present invention. As shown, a main switch Q1 on a primary side of a transformer T is switched by a pulse width signal S1 supplied from a PWM circuit 23. This switching frequency is determined by an oscillator circuit 21. A pulse voltage induced in a secondary winding W3 becomes a primary output voltage V1 by the operation of a diode D1 of a primary output circuit 1 and a choke coil L1 and capacitor C1. This voltage V1 is then applied to a differential amplifier 24, where it is compared to a set voltage Vt to determine the value of the primary output voltage V1.

The value of the differential amplifier, if the primary output voltage V1 is greater than the set voltage Vt, increases, and conversely, if V1 is less than Vt, decreases, or if Vt=V1 , stabilizes by a given voltage level, and feeds back to the PWM circuit 23 a reference signal Vk'.

The differential amplifier 24 which generates this type of reference signal Vk' can be easily constructed by making use of the TL431 type IC sold by Texas Instrument Co.

Where the first circuit and the second circuit of the transformer T are isolated from each other, a photocoupler is provided in the differential amplifier 24, and the reference signal Vk' is fed back to the PWM circuit 23 via this photocoupler.

Since the PWM circuit 23 controls the duty ratio of the pulse signal S1 output on the basis of the reference voltage Vk' received as an input, the primary output voltage V1 reaches a value equal to the set voltage Vt. An auxiliary power supply 22 generates a D.C. voltage from the induction voltage of a winding W4 wound around the core of the transformer T, and supplies this power source voltage to the PWM circuit 23.

The secondary output circuit 10 will be explained below. In Fig. 3 the diodes D3 and D4, the FET Q2, the choke coil L2, and the capacitor C2 have the same functions and effects as described in reference to Fig. 1. In short, diode D3 has the function of rectifying the voltage induced in the winding W2, and the choke coil L2 and capacitor C2 constitute a smoothing circuit. Further, the FET Q2 is arranged between the diode D3 and the smoothing circuit, and controls the amount of electricity entering the smoothing circuit from the winding W2 by means of an on/off operation.

The FETs Q1 and Q2 are illustrated as elements capable of switching operations above several hundred kHz, but IGBTs (insulated gate bipolar transistors) or multipurpose transistors may also be used if they are capable of high speed switching in accordance with an on/off control signal.

The block 30 delineated by dotted lines in Fig. 3 is the key section for achieving the above-described objects of the present invention, and includes a synchronizing signal generator 11, an auxiliary power supply 12, a PWM control circuit 13 and a differential amplifier 14. Each of these sections is described in detail below.

The synchronizing signal generator 11 receives as an input the signal Vsw which repeats high and low states according to the on/off states of the primary switch Q1, and outputs the sawtooth synchronizing signal Vc which repeats a fixed gradient pattern from the time when the Primary switch Q1 switches of to the time when it switches off again.

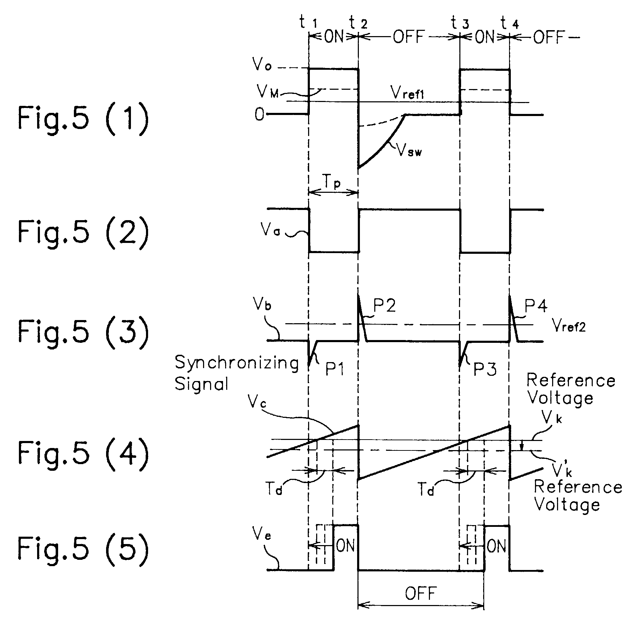

The difference between the synchronizing signal generator of the present invention and conventional synchronizing signal generators resides in the waveform of the output signals thereof. In short, output signal of the synchronizing signal generator of the present invention has the waveform Vc shown in Fig.5 (4), whereas the output signal of a conventional synchronizing has the waveform shown in Fig. 2 (3).

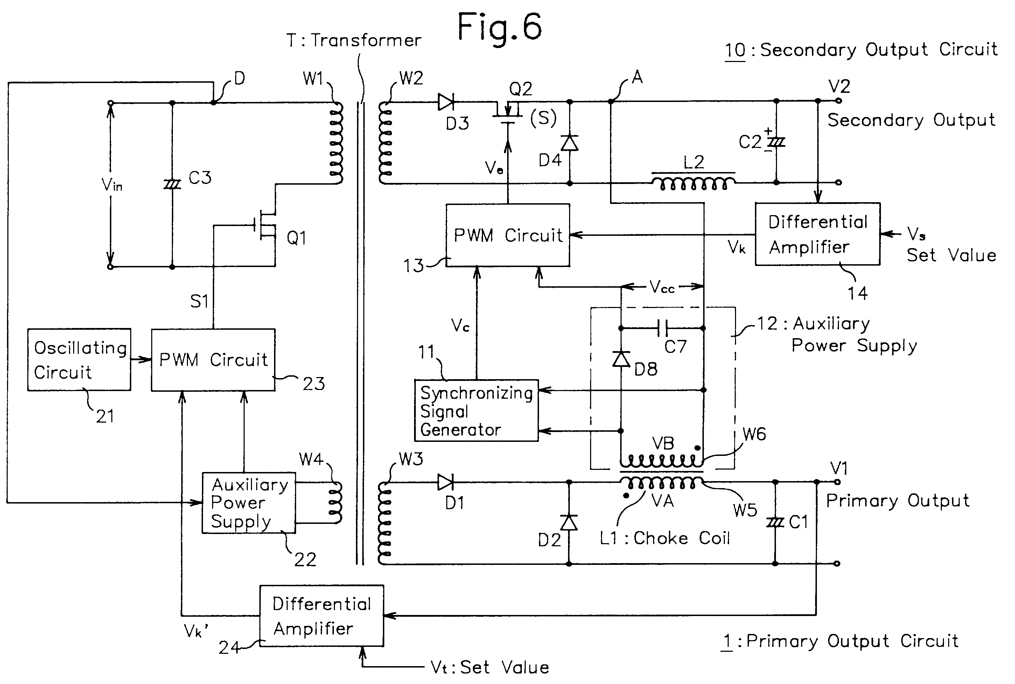

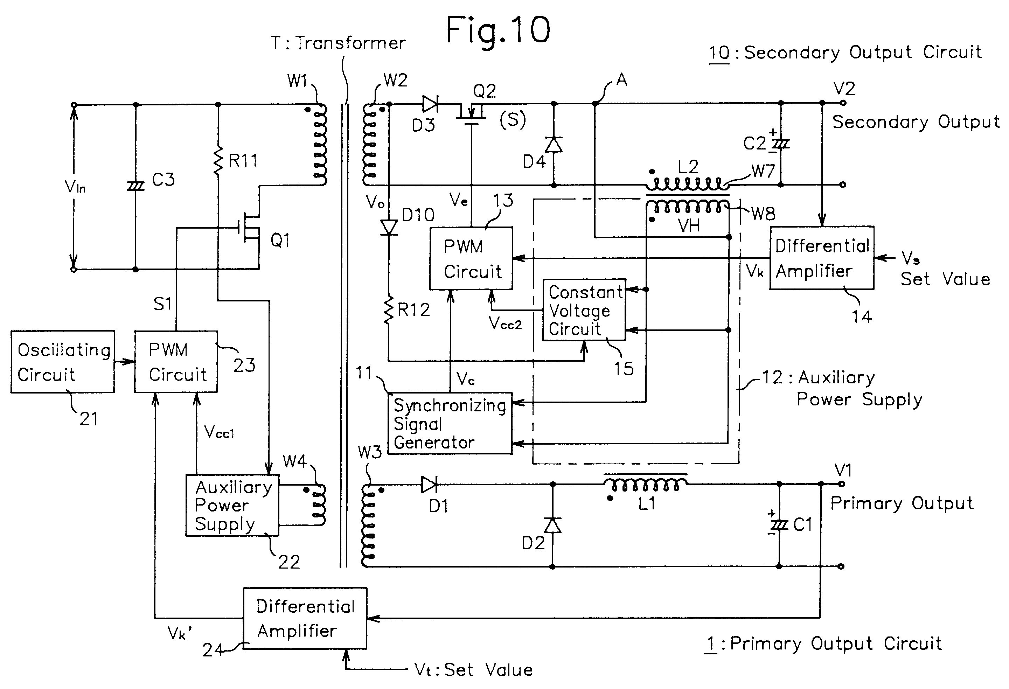

The signal Vsw received as an input by the synchronizing signal generator 11, if it is a signal which repeats between high and low in accordance with the on/off of the main switch Q1, may be extracted from any point in the diagram of Fig. 3; for example, a signal can be received as an input from the point B at one end of the wiring W2 in Fig. 3. Also, in Fig. 6 to be described later, the induction voltage VB of the winding W5 wound around the choke coil L1 of the primary output circuit 1 is received as the signal Vsw. Further, in Fig. 10 to be described later, the induction voltage VH of the winding W8 wound around the choke coil L2 of the secondary output circuit 10 is received as the signal Vsw.

The differential amplifier 14 receives as input the secondary output voltage V2 of the smoothing circuit (secondary output circuit 10) and set voltage Vs for setting the value of the secondary output voltage V2, and outputs the reference signal Vk. The differential amplifier 14 performs the same operation as the differential amplifier 24 described previously, and can employ the same structure. In short, the secondary output voltage V2 is applied to the differential amplifier 14 where it is compared to a set value voltage Vs. The differnetial amplifier 14 then outputs a reference voltage Vk to the PWM circuit 13. The value of the reference signal Vk, if the secondary output signal V2 is greater than the set voltage Vs, increases, and conversely, if V2 is less than Vs, decreases. If Vs equals V2, the value VK stabilizes by a given voltage level. Since this differential amplifier 14 has the same structure as the differential amplifier 24 described above, it can easily be constructed using a TL431 type special use IC which is widely sold.

The auxiliary power supply 12 generates a D.C. voltage Vcc which has a voltage level higher than the potential at the source (point A) of the FET Q2 and is able to drive the FET Q2 on. This auxiliary power supply can have any type of structure as long as it can output a D.C. current Vcc of the above voltage level, but in this case the structure illustrated in Figs. 6 and 10 is preferable. From the point of view of the necessity to generate a voltage higher than the potential at the source (point A) of the FET Q2, the auxiliary power supply, as shown in Fig. 3, receives the potential as inputat point A. Also, a line is provided connecting the point D of the first winding W1, which acts as a starter circuit, to the auxiliary power supply 22, and serves to supply a voltage when the auxiliary power supply starts.

The PWM circuit 13 makes the D.C. voltage Vcc, obtained from the auxiliary power source 12, a power source voltage, and receives the synchronizing signal Vc as input from the synchronizing signal generator 11 and the reference signal Vk from the differential amplifier. The PWM circuit then compares which of the 2 signals Vc and Vk received as input is high and low and applies the resultant signal Ve directly to the gate of the FET Q2, driving it on or off.

For example, when comparing the 2 signals Vc and Vk, if Vc > Vk, the PWM circuit sets the output Ve high, and if Vc < Vk, sets the output Ve low. This type of function can easily be realized by using a commonly sold comparator

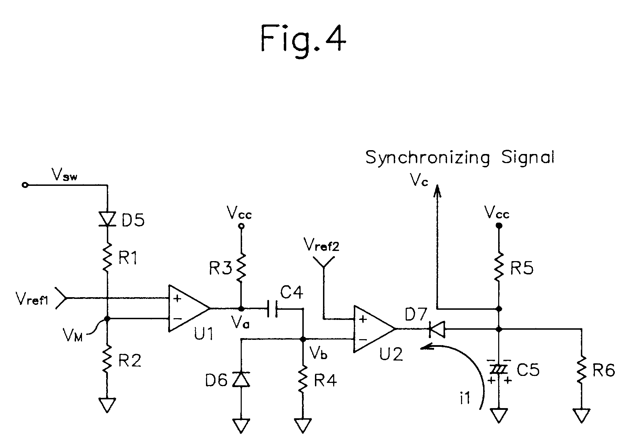

The operation of the device of Fig. 3 constructed as described above will now be described with reference to Figs.4 and 5.

The first feature of the device shown in Fig.3 is that a drive transformer (refer to T2 in Fog.1) is not used to obtain the signal for driving the FET Q2, but rather a D.C. voltage Vcc is produced in the auxiliary power supply 12, and the control signal Ve of the FET Q2 is generated in the PWM circuit which utilizes the above D.C. voltage Vcc as a power supply.

The second feature as shown as (4) in Fig.5, is that the waveform of the synchronizing signal Vc, between each time when the primary switch turns off and the next time it turns off, is a repeating fixed gradient waveform. Also, the auxiliary power supply 12, because it receives the potential as input from point A shown in Fig. 3, can supply a voltage Vcc higher than at point A as a power supply to the PWM circuit. Consequently, since the PWM circuit can apply a voltage approximately Vcc higher than at point A to the gate of the FET Q2, it can drive the FET Q2 directly without going through a drive transformer (T2in Fig. 1). The power source for the auxiliary power supply can be taken from the choke coil L1 as shown in Fig. 6, or from the choke coil L2 as shown in Fig. 10.

The operations of the synchronizing signal generator 11 and the PWM circuit 13 will now be described. Fig. 4 shows the concrete structure of the synchronizing signal generator 11, while Fig. 5 shows the signal waveforms of each section shown in Fig. 5. The signal Vsw in Fig. 4 will be explained as introduced from point B in Fig. 3.

In Fig. 4, a comparator U1 having diodes D5 and D6, resistors R1 to R4 and a reference voltage Vref1, and a capacitor C4 constitute an off-timing detector for detecting the off-timing of the primary switch Q1.

Also, a comparator U2 having a reference voltage Vref2, a diode D7, resistors R5 and R6, and a capacitor C5 consistute a waveform generator.

Winding W2 generates a switching waveform shown as (1) in Fig. 5. In this waveform (1) of Fig. 5, t1 to t2 and t3 to t4 are periods at which the primary switch Q1 is on, and t2 to t3 is the period at which the primary switch Q1 is off.

The output voltage Vo=Vsw of the winding W2 shown as (1) in Fig. 5 is rectified by the diode D5 of Fig. 4, divided by the resistors R1 and R2 ,and applied to the comparator U1. The comparator U1 compares the reference voltage Vrefl applied to one (+) terminal thereof and the divided voltage Vm=(R2∗Vo)/(R1+R2), and as a result outputs the waveform Va shown as (2) in Fig. 5. In other words, this waveform Va is a square waveform whose polarity reverses at the edges t1, t2, t3, etc. of the waveform of Fig. 5 (1) (the waveform of the winding W2).

Since the output signal Va of the comparator U1 is differentiated by the capacitor C4, a differential waveform Vb as shown in Fig. 5 (3),synchronized with the edges of the output voltage Vo of the winding W2 (see Fig. 5 (1)), is applied to the input terminal (-) of the comparator U2. The pulses P2 and P4 of the differential waveform Vb are generated and synchronized with the off timing of the primary switch Q1. Thus, if an excessive minus input enters the input (-) terminal of the comparator U2 from the diode D6, the comparator is protected from damage.

The comparator U2 receivesas input differentail pulses P1, P2, P3, etc. shown in Fig. 5 (3) at the input terminal (-), and the reference voltage Vref2 at the input terminal (+)and compares them. When the differential pulses P2 and P4 are generated, the refernce voltage Vref2 is less than the high value of differential pulses P2 and P4, therefore the output of the comparator U2 rapidly changes to a minus potential. Accordingly,in the circuit of the capacitor C5 and the diode D7, a current i1 flows as shown in Fig. 4, and the charge stored in the capacitor C5 discharges.

In the comparator U2, when the differential pulse P2 disappears, the potential of the input terminal (+) becomes higher than the potential of the input terminal (-), therefore the output thereof reaches an even higher level. Consequently, the diode D7 is off, and the potential of capacitor C5 rises in a uniform gradient to the potential divided by resistors R5 and R6 connected between the common potential of the capacitor C5 and the power supply Vcc. In other words, the signal Vc which is the voltage of the capacitor C5 is becomes a "ramp" waveform which rises in a fixed gradient (see Fig. 5 (4)). The maximum voltage and gradient of the synchronizing signal Vc of Fig. 5 (4) is determined by the values of the resistors R5 and R6, and the capacity of the capacitor C5.

At time t4, if the next trailing edge of the output voltage Vo of the winding W2 is generated and the differential pulse P4 is applied to the comparator U2, the operation described above is repeated and the waveform of the signal Vc suddenly drops to a minus potential and from there rises at a fixed gradient. In this manner the waveform of the synchronizing signal shown in Fig. 5 (4) is produced.

The secondary output circuit of the device shown in Fig. 3 operates in the following manner. As described previously, a switching waveform as shown in Fig. 5 (1)is generated in the winding W2,and the sawtooth synchronizing signal Vc having the shown in Fig. 5 (4) is output from the synchronizing signal generator 11.

The PWM circuit 13 compares the reference voltage Vk, which changes as described above, and the synchronizing Vc(see Fig. 5 (4)), and when the reference voltage Vk is less than the value of the synchronizing signal, a control signal Ve having the waveform shown in Fig. 5 (5) is applied to the gate of the FET Q2. The FET Q2 reaches an on state when the signal Ve is high.

In short, the PWM circuit 13 receives from the auxiliary power supply 12 the voltage Vcc which is large enough to drive the FET Q2 on. Consequently, the signal Ve output from the PWM circuit 13 has a voltage level which can turn on the FET Q2.

This type of device shown in Fig. 3 can produce the control signal Ve shown in Fig. 5 (5) without using the drive transformer T2 shown in Fig. 1. Accordingly, the delay time of the control signal Ve of the device shown in Fig. 3 can be greatly reduced over the delay time of the control signal Ve in the conventional device shown in Fig. 1.

Consequently, even if the switching frequency is extremely high, the device of Fig. 3 can allow the switching operation of the FET Q2 to follow this frequency. In short, it can achieve the first and second objects of the present invention.

Also, although the delay time of the device of Fig. 3 has a greatly reduced value, in order to decrease the effect of the delay time, in the present invention the synchronizing signal Vc has a waveform of a repeating fixed gradient from the time when the primary switch Q1 switches to off to the next time it switches off. Therefore, the entire input pulse width Tp, i.e. the total amount of electricity input from the winding W2 to the seocndary output circuit 10, can be accurately passed to the smoothing circuit, and the third object of the present invention can be achieved.

The detailed explanation for this is as follows. The on state of the FET Q2 is the time period when the refence voltage Vk is less than the value of the synchronizing signal Vc (see Fig. 5 (4)). Since the waveform of the synchronizing signal Vc of the present invention is a repeating fixed gradient waveform which occurs from the time when the primary switch Q1 reaches an on state to the time it reaches the next on state, if the level of the refernce voltage drops, the on period of the FET Q2 can be increased. In other words, because the voltage level of the reference voltage Vk drops until the output voltageV2 of the secondary output circuit equals the set voltage Vs (see Vk' of Fig. 5 (4)), the pulse width of the signal Ve can be widened (see Fig. 5 (5)). In short, even if a delay time Td exists, since the reference voltage Vk can be further decreased, the pulse width of the signal Ve can be increased. For comparison, to explain a conventional circuit, in the conventional circuit shown in Fig. 1, the period wherein the waveform of the sawtooth synchronizing signal as shown in Fig. 2 (3) is generated does not exist except during the the input pulse width period Tp. Due to this, the smoothing circuit cannot be supplied with a signal via the FET Q2 except within the pulse width Tp-Td, even at its maximum.

### Advantages of the device of Fig. 3

According to the present invention shown in Fig. 3 and described above, since a drive transformer (refer to Fig. 1) becomes unnecessary,it is possible to greatly reduce the delay time of the signal Ve which drives the FET Q2. Accordingly, even if a high frequency circuit is constructed with a switching power supply, a large current can be extracted from the secondary output circuit.

Also, because there is no need for a drive transformer T2, high frequency noise does not occur in one side of the transformer T.

To continue, the present invention will be specifically explained. Fig. 6 is a block diagram of the second embodiment of the present invention showing a concrete example of the auxiliary power supply 12 in Fig. 3. In these drawings, the points where the device of Fig. 6 differs from the device of Fig. 3 are:
(a) the auxiliary power source 12 section of Fig. 3 is represented specifically in Fig. 6 by a winding W6, a diode D8, and a capacitor C7.
(b) the signal Vsw received as input by the synchronizing signal generator 11, is represented in Fig. 6 as introducing the signals from both ends of the winding W6. The structure of the synchronizing signal generator 11 itself can be the structure of the embodiment of Fig. 4.

With the exception of (a) and (b) set forth above, the structure of Fig. 6 is the same as that of Fig. 3.

The device of Fig. 6 is described below, focussing on the points of difference between Fig. 6 and Fig. 3.

The winding W6 which constitutes the auxiliary power supply 12 is wound around the core of the choke coil L1 constituting the primary output circuit 1, and one end thereof is connected to point A at the source side of the FET Q2. Winding W5 which forms the choke coil L1 and the newly wound winding W6 are wound in a flyback connecting relationship as shown in Fig. 6 (refer to the two dots of the choke coil L1 section).

Synchronizing signal generator 11 receives as input the induction voltage VB of the winding W6, and outputs the sawtooth synchronizing waveform Vc which repeats at a constant gradient from when the primary switch Q1 turns off to when it turns off again next. The structure and operation of the synchronizing signal generator 11 have already been described with refernce to Fig. 4.

The auxiliary power supply 12 obtains a D.C. voltage Vcc which is the result of rectifying and smoothing the square waveform voltage VB induced in the winding W6 with the diode D8 and the capacitor C7. The D.C. voltage Vcc obtained by simply rectifying and smoothing, is a stabilized voltage. The reason for this is as follows. Primary output circuit 1 is controlled to a set voltage V1 by the PWM circuit 23 on one side of the transformer T. Accordingly, since the energy Va∗Tp stored in the winding W5 of the choke coil L1 becomes fixed , the energy Vb∗(Td-Tp) induced in the winding W6 is fixed.

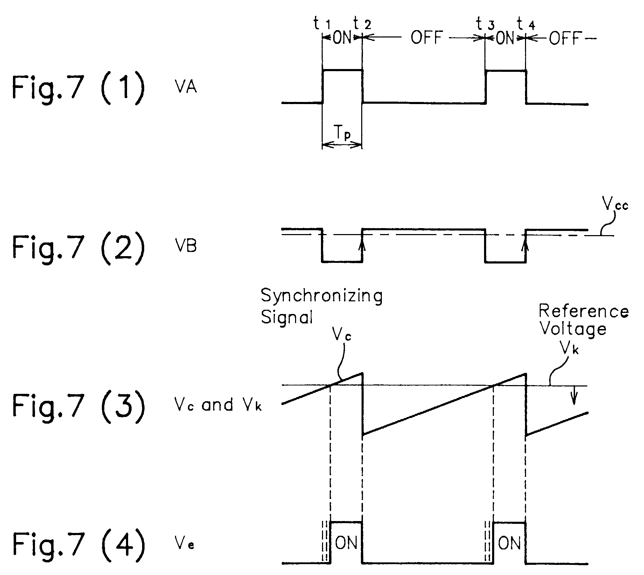

For the above reasons, the D.C. voltage Vcc obtained simply by rectifying and smoothing the voltage VB by means of the diode D8 and the capacitor C7, is a stabilized voltage. This obtained D.C. voltage Vcc is Vcc volts higher than the voltage at point A.
The operations which are the features of the decice of Fig. 6 (operations of the secondary output circuit 10) constructed as above will now be explained with reference to Fig. 7.

The first feature of the device shown in Fig. 6 resides in that another winding W6 is provided for the choke coil L1 of the primary circuit 1, and a D.C. voltage Vcc higher than point A is obtained from this winding W6.

The second feature is that the basic timing signal for producing the synchronizing signal Vc, is produced from the induction voltage VB of the winding W6 wound round the choke coil L1 of the primary output circuit 1.

Firstly, the waveform of the voltage VA as shown in Fig. 7 (1) is induced in the winding W5 of the choke coil L1. Times t1 to t2 and t3 to t4 are the periods when the primary switch Q1 is on, and the time t2 to t3 is the period when the primary switch is off. Windings W5 and W6 have a flyback connecting relationship, and if the induction voltage VB of the winding W6 (see Fig. 7 (2)) is rectified and smoothed, the primary voltage V1 will be stabilized, therefore a stable floating voltage Vcc (of e.g. 15V) is obtained from the auxiliary power supply 12. Also, since they are in a flyback relationship, during the time when the choke coil L1 is off in relation to the primary output circuit, the auxiliary power supply 12 operates so as to receive electricity (see Fig. 7 (2)) as input. Even if the auxiliary power supply 12 is connected, there is no effect on the stability of the primary output voltage V1.

Since point A shown in Fig. 6 is connected to one of the output terminals of the auxiliary power supply 12, the auxiliary power supply 12 can supply to the PWM circuit 13 a voltage Vcc higher than that at point A as a power source voltage. Because the PWM circuit 13 makes the voltage Vcc a power source voltage, a control signal Ve of a voltage about Vcc volts higher than point A can be applied to the gate of the FET Q2. Thus, the on/off drive of the FET Q2 can be performed without a drive transformer (see Fig. 1).

Next, the operations of the synchronizing signal generator 11 and the PWM circuit 13 will be explained. The pulse waveform VB shown in Fig. 7 (2) is applied to the synchronizing signal generator. This pulse waveform VB represents the on/off operation of the primary switch Q1, therefore the synchronizing signal generator 11, as already explained above in Fig. 4, with the knowledge of the leading edges of the waveform VB, can grasp the state from the point where the primary switch goes off till the next point where it goes off. Also, as previously explained, a "sawtooth" waveform Vc which repeats a fixed gradient pattern as shown in Fig. 7 (3) is output.

PWM circuit 13 compares a reference voltage Vk which changes as described above and the synchronizing signal Vc, and the result thereof, as shown in Fig. 7 (4), is a pulse width control signal Ve which is applied to the FET Q2 and drives the on/off thereof.

In the device of Fig. 6 as described above, since the timing signal which is the origin from which the synchronizing signal is produced (the signal which is the on/off signal of the primary switch Q1) is not received as input from the winding W2 of the transformer T, but is instead introduced from the choke coil L1 of the primary output circuit 1, this device has the advantage that the electrical components constituting the synchronizing signal generator 11 need not be high tolerance components.

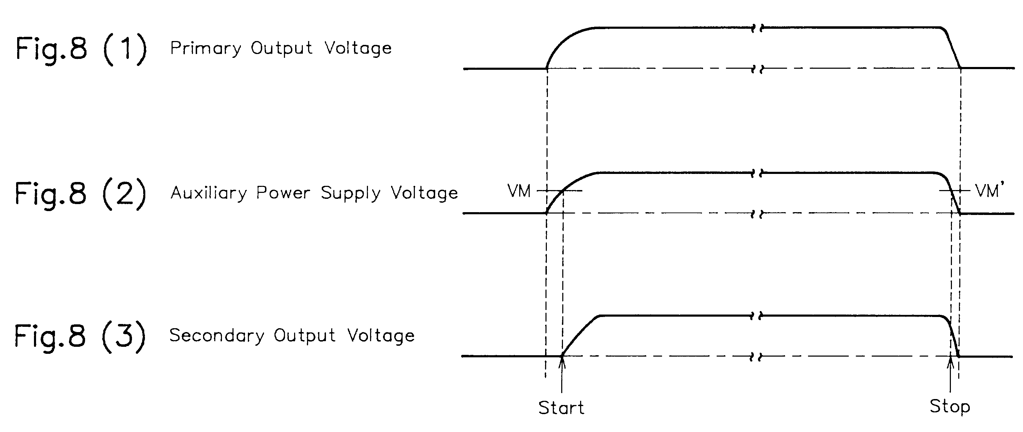

Next, the operation of the entire device shown in Fig. 6 will be explained with reference to Fig. 8.

The initial operation of the device of Fig. 6 is as follows. Firstly, immediately after the D.C. voltage Vin is applied, the FET Q1 is not performing on/off switching. consequently, the transformer T does not generate an inductance voltage, therefore the auxiliary power supply 22 cannot supply a voltage to the PWM circuit 23.

At this point, to start the device of Fig. 6, the voltage at point D in Fig. 6 (the voltage at the terminal of the capacitor C3) is introduced into the auxiliary power supply 22. Accordingly, the auxiliary power supply 22, at the starting time, produces a given voltage level with the voltage of point D, and supplies it to the PWM circuit. By this means the PWM circuit 23 begins operation. When the PWM circuit 23 begins operation, and the winding W4 generates an actual induction voltage, the auxiliary power supply 22 no longer requires the voltage from point D. Then, the D.C. current to be supplied to the PWM circuit 23 is produced by an inductance voltage from the winding W4.

In the above manner, by initiating the operation of the PWM circuit 23, the on/off operation of the FET Q1 is started. As a result, when the primary output voltage V1 rises as shown in Fig. 8 (1), the output voltage Vcc of the auxiliary power supply 12 also rises (see Fig. 8 (2)). Then voltage Vcc arrives at the possible operation voltage VM of the PWM circuit 13 and the PWM circuit begins the operation described above ("S tart" shown in Fig. 8 (3)), and the secondary output voltage V2 rises.

Stoppage of the operation of the device shown in Fig. 6 is as follows. If the operation of the PWM circuit 23 stops, the primary output voltage V1 drops, hence the secondary output voltage Vcc of the auxiliary power supply 12 also drops. When voltage Vcc reaches the operation limit VM' of the PWM circuit 13, the PWM circuit 13 ceases that operation (refer to Fig. 8 (3)).

In this manner, according to the present embodiment, the operations of the primary output circuit 1 and the secondary output circuit 10 can be driven in cooperation. Also, there is the advantage that by looking at the voltage VA of the choke coil of the primary output circuit, the input voltage Vin can be observed.

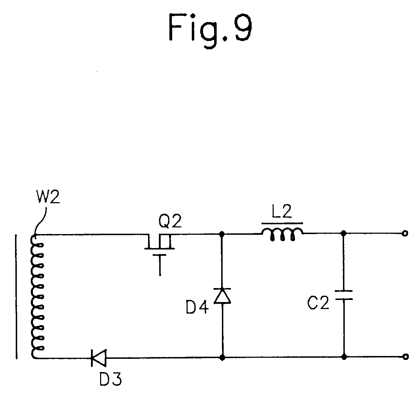

Fig. 9 shows a different design of the choke coil L2, the capacitor C2, the diode D3 and the FET Q2 of the secondary output circuit 10 of the device shown in Fig. 6. Also, the above explanation is of a so-called primary side control method with the PWM circuit 23 arranged on a primary side of the transformer T, but the present invention can be realized with a so-called secondary side method with the PWM circuit 23 arranged on a second side of the transformer T. In this case, the output S1 of the PWM circuit 23 may for example be isolated by a tranformer (not shown) and supplied to the primary switch Q1

### Advantages of the device of Fig. 6

In addition to the advantages attained in the device of Fig. 3,
1. Because the induction voltage VB (see Fig. 7 (2)) of the winding W6 is rectified and smoothed, and the primary output voltage V1 is stabilized, a stable floating voltage Vcc (e.g. 15 V) is obtained from the auxiliary power supply 12. Also, since the windings W5 and W6 are flyback connected, in the period when the choke coil L1 is operating in an off state with respect to the primary output circuit 1, the auxiliary power supply 12 operates so as to receive as input electricity (refer to Fig. 7 (2)). In short, even if the auxiliary power supply 12 is connected thereto, it does not effect the stability of the primary output voltage V1.
2. Since the signal Vsw which serves as the basis for producing the synchronizing signal Vc is taken from circuits other than the transformer T (the choke coil L1), the synchronizing signal generator 11 can be made of low tolerance components, and as a result the switching power supply can be miniaturized even more than that shown in Fig. 3.

The device of Fig. 10 will now be explained. Fig. 10 is a block diagram showing the structure of the third embodiment of the present invention, and specifically shows the auxiliary power source in Fig. 3. The points in which Fig. 10 differs from Fig. 3 are as follows.
(a) The auxiliary power supply 12 of Fig. 3 is illustrated in Fig. 10 comprising a winding W8 and a set voltage circuit 15.
(b) A diode D5 and a resistor R12 constituting a starter circuit of the set voltage circuit are illustrated. Also, the auxiliary power source 12 of the device shown in Fig. 6 does not need a starter circuit since an inductance voltage VB is generated in the winding W6 of the choke coil L1 when the operation of the primary power circuit 1 is started.
(c) In Fig. 10, signals from both ends of the winding W8 are shown as being received as the signal Vsw by the synchronizing signal generator 11. The synchronizing signal generator 11 itself can emplow the structure shown in Fig. 4.
(d) The starter circuit having the resistor R11 which supplies the voltage Vin from the capacitor C3 to the auxiliary power supply 22 is shown.

Except for the above points (a) to (d), the structure of Fig. 10 is the same as that of Fig. 3.

Firstly, the structure of the device of Fig. 10 will be summarized.

In Fig. 10, the winding W8 constituting the auxiliary power supply 12 is wound around the core of the choke coil L2 provided in the secondary output circuit 10. One end of this winding W8 is connected to a point A at the source side os the FET Q2. The auxiliary power supply 12 obtains a D.C. voltage Vcc2 by regulating the induction voltage VH from the winding W8 of the choke coil L2. Since the induction voltage of the winding W8 can be decided by the number of turns in the winding W8, the D.C. voltage Vcc2 can be appropriately determined by the nuber of turns in the winding W8, so that a voltage which is sufficient to drive the FET Q2 can be produced.

Consequently, since the PWM circuit 13 can drive the FET Q2 directly with the output Ve, the signal delay which occurs in a drive transformer T2 (provided in the device shown in Fig. 1 is eliminated.

The device of Fig. 10 will be explained below, focussing on the difference between it and the device shown in Fig. 3.

The auxiliary power supply 12 of Fig. 10 obtain its power from the choke coil L2 of the secondary voltage circuit 10. In other words, the winding W8 is wound around the core of the choke coil L2 constituting the secondary output circuit 10, and one end thereof is connected to point A at the source side of the FET Q2.

The synchronizing signal generator 11 receives as input the induction voltage VH of the winding W8, and outputs a sawtooth synchronizing waveform Vc which repeats a fixed gradient pattern between the time when the primary switch Q1 turns off and the next time when it turns off. The structure and operation of the synchronizing signal have already been explained with reference to Fig. 4.

The auxiliary power source 12 of Fig. 10 differs from the auxiliary power supply of Fig. 6 in that it provides a diode D10 and a resistor R12 which constitute a starter circuit. The reason for providing a starter circuit is as follows.
In the device of Fig. 10, when operation begins, the FET Q2 is still off, therefore a voltage is not generated in the choke coil of the secondary power supply 10. Consequently, a voltage VH is not generated in the winding W8, hence the fixed voltage circuit 15 cannot produce the voltage Vcc2 which is to be supplied to the PWM circuit 13. Therefore, at the starting time, the voltage Vo is received as input from the winding W2 of the transdormer T via the diodde D10 and the resistor R12 to the auxiliary power supply, and from there a voltage Vcc2 of a given level is produced.

By means of the voltage Vcc2 produced at this starting time, when the PWM circuit 13 begins operation,the FET Q2 begins its on/off operation. As a result, a voltage VH is induced in the winding W8 of the choke coil L2 of the secondary output circuit 10. When the induction voltage VH of the winding W8 gradually rises, the auxiliary power supply 12 produces not the voltage supplied from the diode D10 and the resistor R12, but produces a voltage Vcc2 with the induction voltage VH of the winding W8, whereby starting is completed.

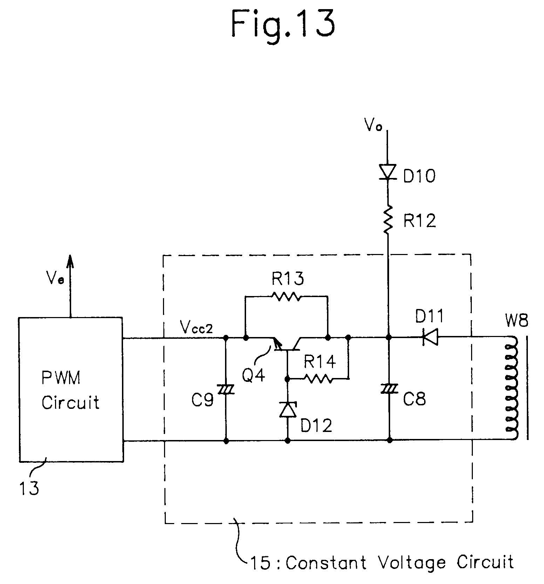

Fig. 13 is a diagram of a concrete example of auxiliary power source 12 having a starter circuit as described above. In Fig. 13, the diode D10, the resistor R12, the winding W8, the set voltage circuit 15 and the PWM circuit 13 are all the same as in afig. 10. The set voltage circuit 15 comprises a diode D11, capacitors C8 and C9, a transistor Q4, a Zenner diode D12 and a resistor R14.

Next the circuit operation of Fig. 13 will be explained. At the time of the starter operation when the induction voltage VH is not generated in the winding W8, the transistor Q4 of the set voltage circuit 15 is cut off because the collector potential is low.

At this time, as shown in Fig. 13, the induction voltage Vo (refer to Fig. 10) of the winding W2 is rectified by the diode D10 and applied to the set voltage circuit 15. This rectified current flows along the channel from resistor R12 to resistor R23 to capacitor C9, and charges the capacitor C9. The voltage Vcc2 of the capacitor C9, by means of the current from the starter circuit, gradually rises, and can put the PWM circuit into operating condition.

As a result, the FET Q2 of Fig. 10 performs the on/off operation, and an induction voltage is produced in the wiring W8. Consequently, the voltage of the capacitor C8 increases, and the transistor Q4 produces a set voltage Vcc2 with the electricity from the winding W8. Also, when the potential of the capacitor C8 increases, the diode D10 of the starter circuit reaches a reverse bias state and cuts off.

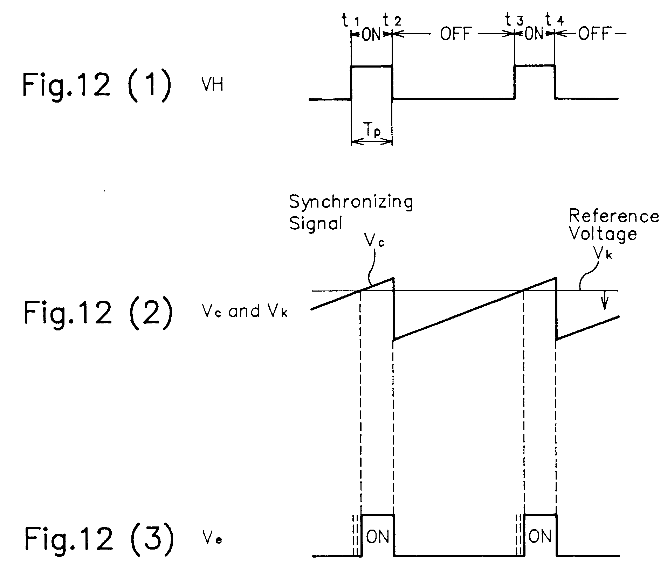

The operation of the device of Fig. 10 having the structure described above will be explained with refence to Fig. 12.

The first feature of the device shown in Fig. 10 is that a new winding W8 is provided in the choke coil L2 of the secondary output circuit 10, and that from this winding W8 a D.C. voltage Vcc2, higher than the voltage at point A, is produced.

The second feature is that a timing signal which is the basis from which the synchronizing signal Vc is produced is generated from the induction voltage VH of the winding W8 wound round the choke coil L2 of the secondary output circuit 10.

The waveform of a voltage VH as shown in Fig. 12 (1) is induced in the winding W8 of the choke coil L2. Herewith, the times t1 to t2 and t3 to t4 are the on periods of the primary switch Q1, and the period t2 to t3 is the off period of the primary switch Q1.

Because one end of the winding W8 is connected to point A shown in Fig. 10, the auxiliary power source 12 can supply to the PWM circuit 13 a power source voltage Vcc2 volts higher than at point A. Accordingly, since the PWM circuit 13 can apply a control signal Ve of a voltage approximately Vcc2 volts higher tha that at point A to the gate of the FET Q2, the FET Q2 can be driven without the use of a drive transformer T2 (see Fig. 1).

Next, the operations of the synchronizing signal generator 11 and the PWM circuit 13 will be explained. The pulse waveform VH shown in Fig. 12 is supplied to the synchronizing signal generator 11. This pulse waveform VH describes the on/off of the primary switch Q1, hence the synchronizing signal generator 11 recognizes the trailing edge of the waveform VH, and can hold from when the primary switch goes off till the next time the primary switch goes off. The synchronizing signal generator 11 outputs a synchronizing signal Vc which, in the time period shown in Fig. 12 (2), repeats a fixed gradient pattern.

The PWM circuit 13, as described previously, carries out a large/small comparison of the changing reference voltage Vk and the synchronizing signal Vc, and supplies a control signal Ve, which is the result of the above operation and which controls the pulse width as shown in Fig. 12 (3), to the FET Q2, thus driving the FET Q2 on and off.

In the device as shown in Fig. 10, the timing signal which is the basis on which the synchronizing signal is produced (the on/off signal of the primary switch Q1) is taken from the transformer T and received as an input from the choke coil L2 of the secondary output circuit 10, hence the electrical components which constitute the the synchronizing signal generator 11 need not be high-tolerance components.

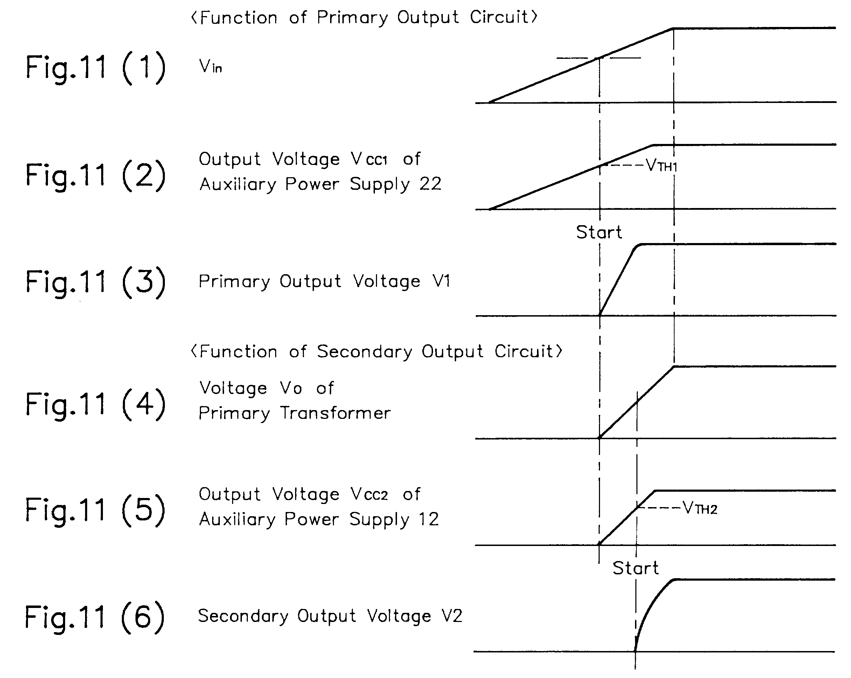

Next, the operation of the entire device shown in Fig. 10 will be described with reference to Fig. 11.

First is an explanation of the first control operation. When the D.C. voltage Vin rises as shown in Fig. 11 (1), the D.C. voltage is supplied to auxiliary power supply 22 via the resistor R11. The auxiliary power supply 22 has the same structure and operation as the auxiliary power source 12 described above with reference to Fig. 13, and raises the output voltage Vcc1 as shown in Fig. 11 (2) by means of the voltage supplied via the resistor R11.

Now, the correspondences of the signals supplied to the auxiliary power supply 12 and the auxiliary power supply 22 will be explained. The voltage Vo supplied to the auxiliary power supply 12 from the primary transformer T corresponds, in the auxiliary power supply 22, to the voltage Vin supplied via the resistor R11. Since the voltage Vin is a direct current, there is no necessity for a diode to be provided in the line connecting the capacitor C3 and the auxiliary power supply 22 and including the resistor R11. Also, the voltage VH of the winding W8 of the choke coil L2 supplied to the auxiliary power supply 12 corresponds, in the auxiliary power supply 22, to the voltage from the winding W4 wound round the primary transformer T.

If the output voltage Vcc1 of the auxiliary power supply 22 is higher than the start voltage Vth1 of the PWM circuit, the oscillation circuit and the PWM circuit function,hence the primary switch Q1 begins its on/off operation. Accordingly, since the primary output circuit 1 begins to operate, the primary output voltage V1 ascends as shown in Fig. 11 (3). The differential amplifier 24 receives as an input the primary output voltage V1 and the set voltage Vt and, as described previously, feeds back a reference signal Vk' to the PWM circuit 23. The PWM circuit 23 performs the aforementioned operation; the primary output voltage V1 stabilizes when it becomes the same as the set voltage Vt.

When the primary voltage V1 rises, power is supplied to the auxiliary power supply 22 from the winding W4, the auxiliary power supply changes to a D.C. voltage Vin, and generates an output voltage Vcc1 from the power supplied from the winding W4. At this time, the power inflow from the D.C. voltage Vin to the auxiliary power supply is intercepted.

When the primary output circuit 1 rises, the induction voltage Vo of the secondary winding W2 of the primary transformer T also rises as shown in Fig.11 (4). This induction voltage Vo is supplied to the auxiliary power source 12 of the secondary output circuit 10 via the diode D10 and the resistor R12. The output voltage Vcc2 of the, by means of the operation previously described with refence to Fig. 13, increases as shown in Fig. 11 (5).If the value of the output voltage Vcc2 of the auxiliary power supply 12 increases beyond the start voltage Vth2 of the PWM circuit 13, the PWM circuit 13 begins to function, and switches the FET Q2. Accordingly, the pulse power of the induction voltage Vo of the winding W2 is supplied to the smoothing circuit via the FET Q2, and the secondary output circuit 10 rises. In short, the secondary output voltage increases as shown in Fig. 11 (6).

When the secondary output voltage V2 rises, floating power is supplied to the set voltage circuit 15 from the winding W8 of the choke coil L2, and the set voltage circuit 15 changes to the induction voltage Vo and generates an output voltage Vcc2 from the voltage VH supplied from the winding W8 (the flow of power from the inductuon voltage Vo to the set voltage circuit 15 is blocked).

The seondary output voltage V2 is compared to the set voltage Vs by the differential amplifier 14, the resultant reference voltage Vk is fed back to the PWM circuit 13, and the secondary output voltage V2 is stabilized.

As described above, the circuits constituting each of the primary circuit 1 and the secondary circuit 10: the auxiliary power supplies 12 and 22, the PWM circuits 13 and 23, and the differential amplifiers 14 and 24, can employ the same types of components. Also ,the FET Q2 can be driven directly by the output of the PWM circuit without the necessity for insulation.

### Advantages of the device of Fig. 10

As well as the advantages of the device shown in Fig. 3,
(1) The auxiliary power supply 12 of Fig. 10 obtains a D.C. voltage Vcc2 by regulating the induction voltage VH of the winding W8 wound round the choke coil L2 of the secondary output circuit 10.
   As the power source of the auxiliary power supply 12, if a new winding is wound round the transformer T and power is obtained from that winding, the winding will require high insulation. However, the winding W8 of Fig. 10 is wound around the core of the choke coil L2 of the secondary output circuit 10, therefore high insulation is not required.
(2) Signal Vsw ,which is the basis on which the synchronizing signal is produced, is taken from circuits other than the transformer T (choke coil L2), therefore the synchronizing signal generator 11 can be constructed using low-tolerance components, with the result that the switching power supply can be miniaturized even further than that of Fig. 3.

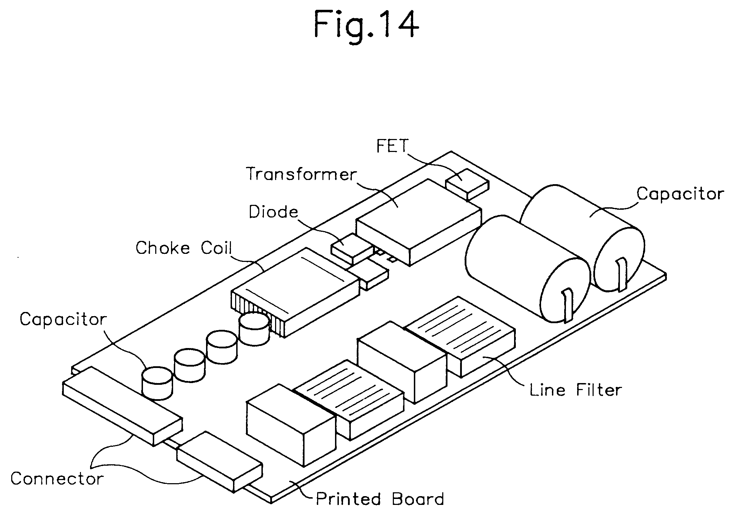

Lastly, the mounting of the switching power supply will be explained. Fig. 14 is a perspective diagram of the structure of the switching power supply. In the figure, the print board is made from an aluminum-type high electrical and high heat conductive material, the upper surface thereof radiating heat originating from the mounted electrical components; essentially the entire lower of the print board serves as a heat sink. On the upper surface, the transformers, line filters, choke coils, and other magnetic components are mounted, as well as electrical and smoothing capacitors. Further, diodes, FETs and other switching components from which radiation originates are mounted on the upper surface; apart from these, other components such as resistors are also mounted on the same side of the print board. These diodes, FETs, resistors and other devices are surface mounted-devices (SMD) for mounting easily these devices on the print board.

When constructed in this manner, the production automation and design automation of power supplies can be considerably advanced.Firstly, regarding the automation of power supply construction, the invention utilizes miniaturized components mounted on the upper surface of a one-sided print board, therefore guidance of conveyor robots is easily accomplished, and production mechanization is advanced. Then, regarding radiation design, the temperature distribution of the print board lower surface was tested with a computer simulation model, if only the conditions of a casing for receiving the power supply are given,it is possible to determine whether or not the rise in the temperature of the power supply is within an allowable range. Also, regarding EMI countermeasures, since thew floating capacity can be measured beforehand, the radiated electromagnetic waves can be forecast accurately by a computer simulation, and determining countermeasures can be easily done by carrying out a practical test. Further, regarding vibration countermeasures, the heavy magnetic components are in direct contact with the upper surface of the pr board, therefore the center of gravity is low and earthquake resistance is improved. In this manner, there is the advantage of ease of designing in view of radiation design, EMI countermeasures, and vibration countermeasures.

## Claims

1. A switching power supply comprising
a primary output circuit for supplying a primary output voltage obtained by switching a primary switching means (Q₁) provided at a primary side of a transformer and smoothing, by means of a first choke coil (L₁), a rectified waveform of a voltage induced in a first winding of a secondary side of said transformer;
a controlling means for controlling the duty ratio of switching to equalize a fixed voltage and said primary output voltage;
a secondary output circuit with a second winding provided at the secondary side of said transformer;
smoothing circuit means (L₂, C₂) for receiving a rectified waveform of an output from said second winding, for smoothing the rectified waveform, and for producing a secondary output voltage therefrom; and
switching element means (Q₂) for receiving said rectified waveform from said second winding and for controlling the amount of current supplied to said smoothing circuit means by means of an ON/OFF operation thereof;
said switching power supply characterized by further comprising:
auxiliary power supply means for generating a direct current voltage having a voltage level higher than a potential at a source point of said switching element means and capable of switching said switching element means;
synchronizing signal generator means (11) for detecting the timing at which said primary switching means is turned OFF, and for generating a synchronizing signal having a sawtooth shaped waveform which repeats at a fixed gradient from a time when said primary switching means is turned OFF to a time when said primary switching means is again turned OFF;
differential amplifier means (14) for receiving as inputs said secondary output voltage from said smoothing circuit means and a second fixed voltage, and for comparing the values thereof, and for outputting a reference signal having a value corresponding to a difference between said secondary output voltage and said second fixed voltage; and
pulse width modulation circuit means (13) for utilizing as a power source voltage direct current voltage obtained from said auxiliary power supply means, and for receiving as inputs said synchronizing signal and said reference signal, and for comparing said synchronizing signal and said reference signal, and for supplying to said switching element means a signal resulting from said comparing.

2. The power supply of claim 1, wherein said synchronizing signal generator means receives an induction voltage from said second winding as an input and detects the timing at which said primary switching means is turned OFF from said induction voltage, and generates said synchronizing signal.

3. The power supply of claim 1, wherein said auxiliary power supply means comprises:
a third winding wound about a core of said first choke coil; and
rectifying and smoothing circuit means comprising a first output terminal connected to said source point of said switching element means, and a second output terminal connected to said pulse width modulation circuit means, for rectifying and smoothing a voltage induced in said third winding and for producing a direct current voltage therefrom.

4. The power supply of claim 3, wherein said synchronizing signal generator receives an induction voltage from said third winding as an input, and detects said time when said primary switching means is turned OFF from said induction voltage, and generates said synchronizing signal.

5. The power supply of claim 1, wherein said smoothing circuit means comprises a smoothing circuit means including a second choke coil for smoothing said rectified waveform received as an input, and for producing said secondary output voltage; and wherein
said auxiliary power supply means comprises a third winding wound about a core of said second choke coil, said third winding having one terminal connected to said source point of said switching element means;
and a fixed voltage circuit means for regulating a signal induced in said third winding, and for producing said direct current voltage and supply said direct current voltage to said pulse width modulation circuit means.

6. The power supply of claim 5, wherein said synchronizing signal generator means receives an induction voltage from said third winding as an input, and detects said time when said primary switching means is turned OFF from said induction voltage, and generating said synchronizing signal.

## Patentansprüche

1. Schaltnetzteil mit:
einer Primärausgangsschaltung zum Liefern einer Primärausgangsspannung, die durch Schalten einer an einer Primärseite eines Transformators vorgesehenen Primärschalteinrichtung (Q₁) und Glätten, mittels einer ersten Drosselspule (L₁), einer gleichgerichteten Wellenform einer in einer ersten Wicklung einer Sekundärseite des Transformators induzierten Spannung erhalten wird;
einer Steuereinrichtung zum Steuern der relativen Schaltdauer eines Schaltens, um eine feste Spannung und die Primärausgangsspannung auszugleichen;
einer Sekundärausgangsschaltung mit einer zweiten Wicklung, die an der Sekundärseite des Transformators vorgesehen ist;
einer glättenden Schaltungseinrichtung (L₂, C₂) zum Empfangen einer gleichgerichteten Wellenform einer Ausgabe von der zweiten Wicklung, zum Glätten der gleichgerichteten Wellenform, und um daraus eine Sekundärausgangsspannung zu erzeugen; und
einer Schaltelementeinrichtung (Q₂) zum Empfangen der gleichgerichteten Wellenform von der zweiten Wicklung und zum Steuern des an die glättende Schaltungseinrichtung gelieferten Stroms durch deren EIN/AUS-Operation;
gekennzeichnet, indem ferner aufweisend:
ein Hilfsnetzteil zum Erzeugen einer Gleichspannung mit einem Spannungspegel, der höher als ein Potential an einem Quellenpunkt der Schaltelementeinrichtung ist und die Schaltelementeinrichtung schalten kann;
eine Synchronisiersignal-Generatoreinrichtung (11) zum Detektieren der Zeitsteuerung, bei der die Primärschalteinrichtung ausgeschaltet wird, und zum Erzeugen eines Synchronisiersignals mit einer sägezahnförmigen Wellenform, die sich mit einem festen Gradienten von einem Zeitpunkt, wenn die Primärschalteinrichtung ausgeschaltet ist, bis zu einem Zeitpunkt wiederholt, wenn die Primärschalteinrichtung wieder ausgeschaltet wird;
eine Differenzverstärkereinrichtung (14) zum Empfangen der Sekundärausgangsspannung von der glättenden Schaltungseinrichtung und einer zweiten festen Spannung als Eingaben, Vergleichen ihrer Werte und Ausgeben eines Referenzsignals mit einem Wert, der einer Differenz zwischen der Sekundärausgangsspannung und der zweiten festen Spannung entspricht; und
eine Pulsbreitenmodulation-Schaltungseinrichtung (13) zum Nutzen einer vom Hilfsnetzteil erhaltenen Gleichspannung als Energiequellenspannung, Empfangen des Synchronisiersignals und des Referenzsignals als Eingaben, Vergleichen des Synchronisiersignals und des Referenzsignals und Liefern eines aus dem Vergleich resultierenden Signals an die Schaltelementeinrichtung.

2. Netzteil nach Anspruch 1, worin die Synchronisiersignal-Generatoreinrichtung eine Induktionsspannung von der zweiten Wicklung als eine Eingabe empfängt und die Zeitsteuerung, bei der die Primärschalteinrichtung ausgeschaltet wird, aus der Induktionsspannung detektiert und das Synchronisiersignal erzeugt.

3. Netzteil nach Anspruch 1, worin das Hilfsnetzteil aufweist:
eine dritte Wicklung, die um einen Kern der ersten Drosselspule gewickelt ist; und
eine gleichrichtende und glättende Schaltungseinrichtung mit einem ersten Ausgangsanschluß, der mit dem Quellenpunkt der Schaltelementeinrichtung verbunden ist, und einem zweiten Ausgangsanschluß, der mit der Pulsbreitenmodulation-Schaltungseinrichtung verbunden ist, zum Gleichrichten und Glätten einer in der dritten Wicklung induzierten Spannung, und um daraus eine Gleichspannung zu erzeugen.

4. Netzteil nach Anspruch 3, worin der Synchronisiersignal-Generator eine Induktionsspannung von dritten Wicklung als eine Eingabe empfängt und die Zeit, wenn die Primärschalteinrichtung ausgeschaltet wird, aus der Induktionsspannung detektiert und das Synchronisiersignal erzeugt.

5. Netzteil nach Anspruch 1, worin die glättende Schaltungseinrichtung eine eine zweite Drosselspule enthaltende glättende Schaltungseinrichtung zum Glätten der als eine Eingabe empfangenen gleichgerichteten Wellenform und zum Erzeugen der Sekundärausgangsspannung aufweist; und worin
das Hilfsnetzteil eine um einen Kern der zweiten Drosselspule gewickelte dritte Wicklung aufweist, wobei die dritte Wicklung einen mit dem Quellenpunkt der Schaltelementeinrichtung verbundenen Anschluß aufweist;
und eine Schaltungseinrichtung mit fester Spannung zum Regeln eines in der dritten Wicklung induzierten Signals und zum Erzeugen der Gleichspannung und Liefern der Gleichspannung an die Pulsbreitenmodulation-Schaltungseinrichtung.

6. Netzteil nach Anspruch 5, worin die Synchronisiersignal-Generatoreinrichtung eine Induktionsspannung von der dritten Wicklung als eine Eingabe empfängt und die Zeit, wenn die Primärschalteinrichtung ausgeschaltet wird, von der Induktionsspannung detektiert und das Synchronisiersignal erzeugt.

## Revendications

1. Alimentation en courant commuté comprenant :
un circuit de sortie primaire destiné à fournir une tension de sortie primaire obtenue par commutation de moyens de commutation primaire (Q1) disposés sur un côté primaire d'un transformateur, et à égaliser, au moyen d'une première bobine d'impédance (L1), une onde redressée d'une tension induite dans un premier bobinage d'un côté secondaire du dit transformateur;
des moyens de commande destinés à commander le rapport de rendement de commutation pour égaliser une tension fixe et ladite tension de sortie primaire;
un circuit de sortie secondaire comportant un second bobinage disposé sur le côté secondaire du dit transformateur;
des moyens de circuit d'égalisation (L2, C2) destinés à recevoir une onde redressée d'une sortie en provenance du dit second bobinage, destinés à égaliser l'onde redressée, et à produire une tension de sortie secondaire à partir de ceux-ci; et
des moyens d'élément de commutation (Q2) destinés à recevoir ladite onde redressée en provenance du dit second bobinage et à commander la quantité de courant fournie aux dits moyens de circuit d'égalisation au moyen d'un fonctionnement "Marche / Arrêt" de ceux-ci;
ladite alimentation en puissance de commutation étant caractérisée en ce qu'elle comprend en outre :
des moyens d'alimentation en puissance auxiliaires destinés à générer une tension de courant continu ayant un niveau de tension supérieur à un potentiel à un point de source des dits moyens d'élément de commutation et capable de commuter lesdits moyens d'élément de commutation;
des moyens de générateur de signal de synchronisation (11) destinés à détecter le moment auquel lesdits moyens de commutation primaire sont mis en position "Arrêt", et destinés à générer un signal de synchronisation ayant une onde en forme de dents de scie qui répète selon un gradient fixe à partir d'un moment où lesdits moyens de commutation primaires sont en position "Arrêt" jusqu'à un moment où lesdits moyens de commutation primaires sont de nouveau mis en position "Arrêt";
des moyens d'amplificateur différentiel (14) destinés à recevoir en tant qu'entrées ladite tension de sortie secondaire en provenance des dits moyens de circuit d'égalisation et une seconde tension fixe et à comparer les valeurs de celles-ci, et destinés à délivrer un signal de référence ayant une valeur correspondant à une différence entre ladite tension de sortie secondaire et ladite seconde tension fixe; et
des moyens de circuit de modulation de largeur d'impulsion (13) destinés à utiliser en tant que tension de source de puissance une tension courant continu obtenue à partir des dits moyens d'alimentation en puissance auxiliaires, et destinés à recevoir en tant qu'entrées ledit signal de synchronisation et ledit signal de référence, et destinés à fournir aux dits moyens d'élément de commutation un signal résultant de ladite comparaison.

2. Alimentation selon la revendication 1, dans laquelle lesdits moyens de générateur de signal de synchronisation reçoivent une tension d'induction en provenance du dit second bobinage en tant au'entrée et détectent le moment auquel lesdits moyens de commutation primaire sont mis en position "Arrêt" à partir de ladite tension d'induction, et génèrent ledit signal de synchronisation.

3. Alimentation selon la revendication 1, dans laquelle lesdits moyens d'alimentation en puissance auxiliaires comprennent :
un troisième bobinage enroulé autour d'un noyau de ladite première bobine d'impédance; et
des moyens de circuit d'égalisation et de redressement comprenant une première borne de sortie connectée au dit point de source des dits moyens d'élément de commutation, et une seconde borne de sortie connectée aux dits moyens de circuit ce modulation de largeur d'impulsion, destinés à redresser et égaliser une tension induite dans ledit troisième bobinage et à produire une tension courant continu à partir de ceux-ci.

4. Alimentation selon la revendication 3, dans laquelle ledit générateur de signal de synchronisation reçoit une tension d'induction en provenance du dit troisième bobinage en tant qu'entrée, et détecte ledit moment où lesdits moyens de commutation primaire sont mis en position "Arrêt" à partir de ladite tension d'induction, et génère ledit signal de synchronisation.

5. Alimentation selon la revendication 1, dans laquelle lesdits moyens de circuit d'égalisation comprennent des moyens de circuit d'égalisation comprenant une seconde bobine d'impédance destinée à égaliser ladite onde redressée reçue en tant qu'entrée, et à produire ladite tension de sortie secondaire; et dans laquelle :
lesdits moyens d'alimentation en puissance auxiliaires comprennent un troisième bobinage enroulé autour d'un noyau de ladite seconde bobine d'impédance, ledit troisième bobinage ayant une borne connectée au dit point de source des dits moyens d'élément de commutation;
et des moyens de circuit de tension fixe destinés à réguler un signal induit dans ledit troisième bobinage, et à produire ladite tension courant continu et fournir ladite tension courant continu aux dits moyens de circuit de modulation de largeur d'impulsion.

6. Alimentation selon la revendication 5, dans laquelle lesdits moyens de générateur de signal ce synchronisation reçoivent une tension d'induction en provenance du dit troisième bobinage en tant qu'entrée, et détectent ledit moment où lesdits moyens de commutation primaire sont mis en position "Arrêt" à partir de ladite tension d'induction, et génèrent ledit signal de synchronisation.
